# FASCICULE DE BREVET EUROPEEN

(11) **EP 0 541 441 B1**
(45) Date de publication et mention de la délivrance du brevet: **08.05.1996**
(21) Numéro de dépôt: 92402987.9
(22) Date de dépôt: 04.11.1992
(51) Int. Cl.: B29C 47/10

(54) **Procédé de fabrication d'un produit composite par moulage**
Herstellungsverfahren zum Formen eines Verbundproduktes
Process of manufacturing a composite moulded product

(30) Priorité: 08.11.1991 FR 9113773
(43) Date de publication de la demande: 12.05.1993
(73) Titulaire: VETROTEX FRANCE S.A., F-73000 Chambéry (FR)
(72) Inventeur: Boissonnat, Philippe, F-73230 Barby (FR); Loubinoux, Dominique, F-38660 La Terrasse (FR); Roncato, Giordano, F-73100 Aix Les Bains (FR); Fedorowsky, Robert, F-73100 Aix Les Bains (FR); Zanella, Guy, F-73160 Cognin (FR)
(74) Mandataire: Breton, Jean-Claude

(56) Documents cités:
- EP-A- 0 033 244
- EP-A- 0 138 294
- EP-A- 0 182 335
- EP-A- 0 367 661
- FR-A- 2 084 596
- FR-A- 2 097 191
- US-A- 4 616 989

## Description

La présente invention concerne un procédé de fabrication par moulage d'un produit composite formé pour l'essentiel d'une matière organique thermoplastique et de fils de renfort. Il s'agit plus précisément d'un procédé de moulage par extrusion ou par injection, mis en oeuvre par un dispositif alimenté en matière organique thermoplastique et en fils de renfort, notamment par des fils de verre.

Par souci d'abréviation, les termes matière organique dans le texte qui suit sont synonymes de matière organique thermoplastique.

La fabrication de profilés obtenus par extrusion à travers une filière de matière organique et de fils de renfort, tels que des fils de verre, et la fabrication d'objets obtenus par injection de ces mêmes constituants dans un moule doivent résoudre les mêmes difficultés lors du mélange desdits constituants : d'une part il est nécessaire d'obtenir le mélange le plus homogène possible entre la matière organique et le renfort avant l'opération de moulage; d'autre part il est désirable que les fils de renfort confèrent les meilleures propriétés mécaniques au produit composite fabriqué et pour cela il est souhaitable, notamment, d'éviter une trop grande fragmentation desdits fils.

Il est connu de réaliser cette opération de mélange grâce à une extrudeuse qui est formée d'un cylindre chauffé dans lequel tourne une vis d'Archimède sous l'action d'un moteur. Ce cylindre comporte, à la partie supérieure de l'une de ses extrémités, une trémie dont la base s'ouvre directement sur la vis d'Archimède. L'extrudeuse est alimentée en matière organique et en fils de verre par l'intermédiaire de cette trémie.

La matière organique et les fils de renfort, par exemple des fils de verre peuvent être introduits simultanément dans la trémie de plusieurs manières :
* la matière organique est stockée, sous forme de granulés, dans une trémie disposée au-dessus d'une bande transporteuse dont la vitesse d'avancement est réglable. Les fils de verre sont stockés sous forme de fils coupés dans une autre trémie, disposée au-dessus d'une autre bande transporteuse et dont la vitesse d'avancement est également réglable. Ces bandes viennent se déverser dans la trémie d'alimentation de l'extrudeuse. Cette méthode nécessite l'emploi de dispositifs de dosage pondéraux ou volumétriques pour maintenir constantes les proportions respectives de matière organique et de fils coupés.
* une seconde manière consiste à mélanger au préalable la matière organique et les fils coupés. Ce mélange, versé dans une trémie, est amené jusqu'à la trémie d'alimentation de l'extrudeuse par une bande transporteuse. Cette méthode nécessite également un équipement supplémentaire pour réaliser le mélange des deux constituants.
* l'extrudeuse peut être également alimentée à partir de granulés comprenant des fibres de verre enrobés de matière organique. Ces granulés peuvent être obtenus selon différents procédés. Ainsi la demande de brevet EP-A-0 393 532 préconise d'imprégner sous pression des fils de verre puis de les tronçonner.

Une variante est mentionnée dans la demande de brevet EP-A-0 367 661. Elle consiste à enrober d'un apprêt organique les filaments d'un fil composite avant de l'exposer à un rayonnement actinique. Ceci a pour but de donner une cohésion au fil composite qui peut alors être tronçonné à l'aide d'une machine de coupe.

Il est également connu d'introduire la matière organique et les fils de verre dans l'extrudeuse en deux endroits différents. La matière organique est introduite sous forme de granulés, en amont d'une double vis d'Archimède, de la même manière que dans le premier procédé décrit précédemment. Les fils de verre sont introduits dans l'extrudeuse en aval de la zone de malaxage et de fusion de la matière organique. Ils sont introduits sous forme de fils continus, extraits d'un ou plusieurs enroulements disposés sur un cantre. Un procédé de ce type est décrit, par exemple, dans le brevet US-A-3.304.282.

Ces différents procédés ont comme point commun d'être mis en oeuvre par des extrudeuses d'une grande longueur, équipées de vis de profils parfois complexes.

En effet, la vis d'Archimède (simple ou double) en amont de l'extrudeuse a pour fonction de malaxer et de fondre les granulés de matière organique comprenant ou non des fils de renfort. Pour remplir cette fonction la vis peut avoir des profils différents selon la granulométrie de la matière organique employée. L'angle d'hélice du filet de la vis, la profondeur du filet, la forme du noyau de la vis (cylindrique ou conique), le pas de la vis, etc, sont autant de facteurs qui déterminent le degré de compression et de cisaillement de la matière organique.

Outre la longueur et la complexité de la vis utilisée, il faut souligner également que la quantité d'énergie nécessaire pour obtenir une matière fondue homogène est importante.

Lorsque les fils de renfort sont introduits dans l'extrudeuse mélangés aux granulés de matière organique, lesdits fils sont également soumis aux forces de cisaillement provoquant la fusion de la matière, ce qui entraîne leur fragmentation.

Cet inconvénient pourraît être en partie évité, en introduisant les fils de renfort dans l'extrudeuse sous forme de fil continu, en aval de la zone de fusion de la matière organique thermoplastique. En fait, les fils de renfort doivent subir à leur tour un malaxage intense dans la matière fondue afin d'obtenir une répartition homogène des fils de renfort au sein de ladite matière. Cette opération provoque également une importante fragmentation de ces fils.

La présente invention se propose d'atténuer, voire de supprimer certains inconvénients présentés par les procédés connus.

La présente invention a notamment pour objet un procédé de fabrication d'un produit composite obtenu par moulage par extrusion ou par injection d'un mélange de matière organique et de fils de renfort, qui permet de fondre rapidement la matière organique et d'y incorporer de manière homogène les fils de renfort en diminuant leur taux de fragmentation.

Le but de l'invention est atteint grâce à un procédé de fabrication, selon lequel un produit composite, formé par l'association d'une matière organique, de fils de renfort tels que des fils de verre et éventuellement de matières minérales et d'adjuvants organiques, est obtenu par moulage par extrusion ou par injection à partir d'une extrudeuse alimentée par ladite matière et ledit renfort, qui consiste à ce qu'au moins une partie de la matière organique est introduite dans ladite extrudeuse sous la forme de fils ou de filaments continus.

Par extrudeuse, il faut comprendre dispositif d'extrusion pris dans le sens le plus large du terme.

La matière organique peut se présenter sous forme de filaments séparés ou réunis de manière à former un ou plusieurs fils, ces filaments ou ces fils étant éventuellement associés à des fils de renfort sous la forme d'un ou plusieurs fils composites continus.

Toutes ces présentations ou associations ont comme point commun le fait que la matière organique est sous la forme de filaments continus, chaque filament possédant un diamètre généralement compris entre environ 10 et 50 microns. Autrement dit, dans le procédé selon l'invention, la matière organique se présente sous forme d'éléments séparés de diamètres beaucoup plus faibles que celles des granulés traditionnellement employés dans les procédés connus, qui sont de l'ordre de plusieurs millimètres. La matière ainsi divisée présente une grande surface d'échange, qui permet d'accélérer les transferts thermiques. Cette grande surface favorise les frottements qui provoquent un échauffement rapide de la matière.

A cela s'ajoute l'action conjointe de la vis d'Archimède et de la paroi chauffée du cylindre dans lequel elle tourne, qui provoque un échauffement rapide de la matière dans toute sa masse. Il s'ensuit une fusion rapide et homogène de la matière organique.

Par contre, lorsque la matière organique est introduite dans l'extrudeuse uniquement sous forme de granulés, l'échauffement de la matière est plus long et sa fusion n'est pas homogène. Certains spécialistes ont émis l'hypothèse que les granulés soumis aux forces de cisaillement et proches de la paroi chauffée du cylindre fondent rapidement alors que les granulés emprisonnés dans les filets de la vis restent à l'état solide. Quelles que soit les hypothèses formulées pour expliquer le comportement de la matière au sein de l'extrudeuse, il a été constaté que le procédé selon l'invention permet de fondre la matière de façon homogène beaucoup plus rapidement qu'en utilisant les procédés connus.

Grâce à l'invention, il est ainsi possible d'utiliser des extrudeuses dont la ou les vis d'Archimède sont plus courtes et dont le profil est plus simple que celles utilisées à ce jour. Le coût d'une installation de moulage par extrusion ou injection peut donc être fortement réduit.

Le fait d'introduire la matière organique sous forme de fils ou filaments continus permet d'alimenter l'extrudeuse de manière absolument constante, ce qui assure la régularité du débit de matière à sa sortie et donc la constance du taux de matière organique dans le composite ultérieurement formé.

Cette régularité de l'alimentation est obtenue par le simple entraînement des fils de matière organique par la ou les vis d'Archimède qui tournent à vitesse constante.

Ce mode d'alimentation est parfaitement adapté à la fabrication de produits composites, quelle que soit la proportion de matière organique nécessaire pour leur fabrication. Pour changer la proportion de matière organique il suffit de modifier le nombre de fils ou filaments de matière et/ou de choisir des fils de titre différent, voire de modifier la vitesse de rotation de la vis d'Archimède.

Ce mode d'alimentation présente donc l'avantage d'éviter l'implantation d'au moins certains dispositifs de dosage pondéraux ou volumétriques nécessités par les procédés connus. La suppression de tels dispositifs dans une installation de moulage utilisant le procédé selon l'invention permet de diminuer encore le coût d'une telle installation.

Les fils de renfort, par exemple des fils de verre, sont également introduits dans l'extrudeuse, de préférence, sous forme de fils continus.

Ils peuvent être introduits dans l'extrudeuse, en aval de la zone de fusion de la matière organique. Dans ce mode de réalisation, les avantages conférés par la présente invention se limitent à ceux décrits précédemment. La fragmentation des fils de verre, qui résulte des forces de compression et de cisaillement subies par lesdits fils de verre lors de leur mélange avec la matière organique, est sensiblement la même que celle obtenue en utilisant un procédé du type de celui décrit par le brevet US-A-3 304 282.

Les fils ou filaments de matière organique et les fils de renfort sont, de préférence, introduits dans l'extrudeuse par la même entrée. Les avantages conférés par l'invention sont alors pleinement obtenus.

En effet, il a été indiqué précédemment que la matière organique fond rapidement et de façon homogène, et que ceci permet d'utiliser une vis d'Archimède plus courte et de profil moins complexe que celles de l'art antérieur. La facilité avec laquelle la matière fond permet, notamment, d'adopter une vis dont l'effet de cisaillement est faible. Les fils de renfort, introduits en même temps que les fils ou filaments de matière, sont alors rapidement mélangés à la matière malaxée par la vis en subissant un cisaillement relativement faible.

Il est ainsi possible d'obtenir un mélange homogène dans lequel les fils de renforts présentent des longueurs pouvant dépasser plusieurs millimètres.

Les fils continus de matière organique peuvent être extraits d'enroulements obtenus par les moyens traditionnels : alimentation d'une tête d'extrusion par la matière à l'état fondu, puis étirage mécanique de la matière extrudée à travers les orifices ménagés à la base de ladite tête. Les fils de renfort, tels que des fils de verre, peuvent être introduits dans l'extrudeuse sous forme de fils coupés par la même entrée que les fils continus de matière organique. Ces fils coupés peuvent être de longueur constante ou variable selon qu'ils résultent de la coupe de fils continus par une machine de coupe ou de hachage d'enroulements destinés au rebut, par exemple d'enroulements incomplets. Le faible cisaillement imposé à la matière pour la fondre limite ainsi la fragmentation des fils coupés lors de l'opération de mélange. La longueur des fils de verre dans le produit composite final est ainsi en partie conservée.

Ce mode de réalisation de l'invention nécessite la coupe préalable des fils de verre, leur stockage dans une trémie et l'emploi d'un dispositif réglant leur vitesse d'introduction dans l'extrudeuse. Les fils de verre peuvent être également coupés in situ par une machine de coupe alimentée par des fils de verre continus extraits d'enroulements. La vitesse de la machine de coupe peut être un paramètre de réglage de l'alimentation de l'extrudeuse en fils coupés.

L'invention est, de préférence, mise en oeuvre à partir de fils ou de filaments continus de matière organique et de renfort.

Ainsi les fils continus de matière organique et les fils continus de renfort peuvent être extraits d'enroulements séparés, fabriqués préalablement. Les fils de matière organique et, par exemple, les fils de verre sont réunis en une mêche pour être introduits dans l'extrudeuse. Selon le taux de verre désiré dans le produit composite, le nombre de fils et/ou leur titre sont mélangés en conséquence pour chaque constituant.

Les fils ou filaments de matière organique et les fils de renfort sont avantageusement introduits dans l'extrudeuse sous la forme d'un seul fil continu, comprenant un nombre bien défini de fils ou filaments de matière organique et de renfort. Ce fil sera appelé ci-après fil composite.

Un tel fil, composé par exemple de fils ou filaments de matière et de verre, peut être obtenu directement par le procédé décrit dans la demande de brevet EP-A-0.367.661.

Le fil composite utilisé, de préférence, dans le cadre de l'invention comprend une majorité de filaments de verre dans son axe et une majorité de filaments de matière organique à sa périphérie.

Ce type de fil est obtenu, par exemple, en étirant simultanément des filaments de verre et des filaments de matière organique, les premiers se trouvant au milieu de la zone délimitée par la ou les nappes formées par les seconds. Cette présentation à l'avantage de réduire les risques de rupture des filaments de verre consécutive à leur frottement sur des surfaces solides. Cette présentation contribue à l'obtention de pièces composites aux propriétés mécaniques élevées.

La matière organique qui constitue le fil composite peut être uniquement sous forme de filaments continus ou en partie, sous une forme d'une fine couche gainant le fil composite. Ce gainage est obtenu par des moyens connus, par exemple en faisant passer le fil composite dans l'axe d'une tête de recouvrement alimentée en matière organique sous pression.

Ce fil peut être utilisé sous forme de fil coupé. En effet, la gaine comprime et maintient les filaments au sein du fil, de plus, elle est écrasée par les lames de coupe ce qui provoque la fermeture partielle des extrémités de chaque tronçon au sein duquel les filaments de verre et les filaments organiques demeurent séparés.

Selon le taux de verre choisi pour renforcer la pièce composite finale, il est possible d'utiliser un ou plusieurs fils composites dont la teneur en verre correspond à celle de la pièce désirée, ou plusieurs fils composites dont la teneur en verre est différente mais dont l'association permet le renforcement désiré.

Bien que les modes de réalisation décrits ci-après soient moins avantageux que ceux exposés précédemment, ces modes font également partie de l'invention.

Ainsi il est possible d'introduire la matière organique dans le dispositif d'extrusion, en partie sous forme de granulés, en partie sous forme de fils ou filaments continus. Dans ce cas, les granulés et les fils sont introduits par deux entrées différentes, les granulés étant fondus en amont des fils.

Ces granulés peuvent être constitués uniquement de matière organique ou comprendre des fibres de verre. Dans ce dernier cas, il peut s'agir de granulés obtenus par extrusion d'une manière connue en soi. Il peut s'agir aussi de granulés provenant du broyage d'objets composites mis au rebut, tels que des pièces défectueuses ou extraites de dispositifs hors d'usage. Ce dernier type de granulés permet de recycler un matériau qui, n'étant pas biodégradable, viendrait s'ajouter aux nombreux déchets domestiques et industriels qui dénaturent l'environnement.

D'une manière plus générale, quel que soit le mode de réalisation choisi, il est possible d'introduire dans le dispositif d'extrusion au moins une partie de la matière organique sous forme de matière colorée par un adjuvant.

La description qui suit donnera une idée plus précise des avantages conférés par la présente invention. Elle est illustrée, par une figure qui représente schématiquement un mode préféré de mise en oeuvre de l'invention.

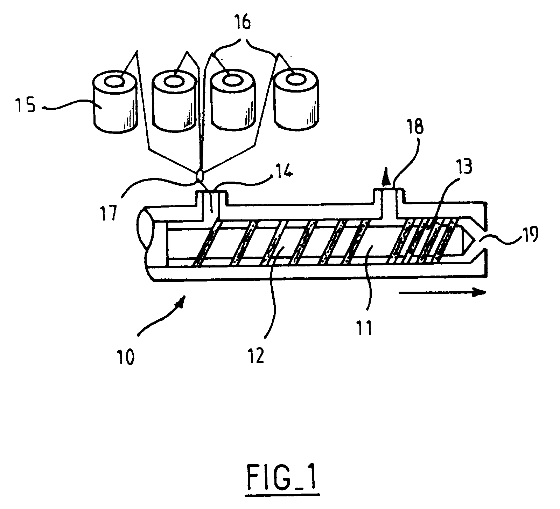

Cette figure représente en coupe verticale longitudinale une partie du corps d'une extrudeuse 10. Elle est équipée de deux vis semblables tournant dans le même sens, la figure ne montrant que l'une d'entre elles. Cette vis d'Archimède possède un noyau 11 cylindrique comprenant, en amont, une zone 12 à pas de vis dégressif et, en aval, une zone 13 à pas de vis constant.

Au début de la zone 12, le corps de l'extrudeuse 10 est muni à sa partie supérieure d'une ouverture 14 servant à l'alimentation de l'extrudeuse. A proximité de cette ouverture, des enroulements 15 de fils composites sont disposés sur un cantre non représentés. Les fils composites 16 sont extraits de ces enroulements à la dévidée et guidés par des moyens non représentés jusqu'à un dispositif d'assemblage 17. Ce dispositif 17 rassemble les fils 16 en une mêche qui est introduite dans l'extrudeuse.

Entre les zones 12 et 13, le corps de l'extrudeuse comprend à sa partie supérieure un orifice 18 par lequel l'air occlus lors du mélange peut être éventuellement évacué. Cet orifice peut être relié, par exemple, à une pompe à vide pour accélérer l'élimination de cet air.

La zone 12 a pour fonction essentielle la fusion de la matière organique et l'incorporation des fils de verre dans la matière fondue ; la zone 13 a pour fonction d'homogénéiser le mélange avant sa distribution par l'extrémité 19. Cette extrémité peut être munie d'équipements différents selon le produit composite à réaliser.

Ainsi cette extrémité peut être équipée d'une filière d'extrusion connue en soi permettant la fabrication d'un profilé en continu.

C'est ainsi que le procédé selon l'invention peut s'appliquer à la fabrication d'un profilé en forme de baguette cylindrique généralement appelée jonc. Ce profilé est refroidi à l'eau et tronçonné en fragments de petites longueurs appelés granulés. Ces granulés sont des produits intermédiaires généralement utilisés comme matière première pour alimenter des dispositifs de moulage par extrusion ou par injection.

Le procédé selon l'invention s'applique avantageusement à la fabrication directe d'un objet profilé par extrusion, qu'il s'agisse de profilé ouvert ou de profilé creux.

Le procédé selon l'invention s'applique aussi avantageusement à la fabrication d'objet obtenu par injection dans un moule. L'extrudeuse est alors munie à son extrémité d'une buse à obturateur connue en soi, qui assure la liaison avec le moule. La vis de l'extrudeuse est mobile et maintenue du côté opposé à la buse par un vérin hydraulique. La vis fait successivement fonction de vis de plastification et de mélange avec le renfort puis de piston d'injection.

Toutes les matières organiques thermoplastiques susceptibles d'être transformées en fils continus peuvent être utilisées dans le cadre de l'invention. Ce sont, par exemple, les polypropylènes, les polyamides, les polyesters.

Outre les matières minérales servant par exemple de charges, il est possible d'introduire dans l'extrudeuse des adjuvants organiques afin d'améliorer le mouillage du renfort et de favoriser son adhésion à la matière organique. Il peut s'agir en l'occurrence de polymères sur lesquels sont greffées chimiquement des molécules possédant des groupements carbonyles. Ainsi, lorsque le renfort est formé de fil de verre, ces groupements sont susceptibles de créer, avec un silane déposé préalablement sur le verre, des liaisons de type van der Waals ou covalentes. Ces adjuvants peuvent également permettre de mélanger différents polyméres, par exemple un polyamide recyclé du type connu sous la marque Nylon et des fils composites comprenant des fils ou filaments en polypropylène. On peut ainsi utiliser, par exemple, un polypropylène commercialisé par la Société EASTMANN KODAK sous la marque Epolène E43.

## Revendications

1. Procédé de fabrication d'un produit composite, formé par l'association d'une matière organique thermoplastique, de fils de renfort, tels que des fils de verre, et éventuellement de matières minérales et d'adjuvants organiques, obtenu par moulage par extrusion ou par injection à partir d'une extrudeuse alimentée par ladite matière et ledit renfort, qui consiste à introduire dans cette extrudeuse au moins une partie de la matière organique sous forme de fils ou de filaments continus.

2. Procédé selon la revendication 1, **caractérisé en ce que** les fils continus de matière organique et les fils de renfort sont introduits dans l'extrudeuse par la même entrée.

3. Procédé selon la revendication 2, **caractérisé en ce que** les fils de renfort sont introduits dans l'extrudeuse sous forme de fils coupés.

4. Procédé selon la revendication 2, **caractérisé en ce qu**'on alimente l'extrudeuse à partir de fils continus de matière organique extraits d'un ou plusieurs enroulements, et de fils continus de renfort extraits d'un ou plusieurs autres enroulements.

5. Procédé selon la revendications 1, **caractérisé en ce que** les fils continus de matière organique et les fils de renfort, également sous forme de fils continus, sont introduits dans l'extrudeuse par deux entrées différentes, les seconds étants introduits en aval de l'entrée des premiers.

6. Procédé selon la revendication 1, **caractérisé en ce qu**'on alimente l'extrudeuse par au moins un fil composite formé par la réunion de filaments continus de verre et de filaments continus de matière organique.

7. Procédé selon la revendication 6, **caractérisé en ce qu**'on alimente l'extrudeuse à partir d'au moins un fil composite dont une fraction de la matière organique est sous forme d'une couche gainant ledit fil.

8. Procédé selon la revendication 6, **caractérisé en ce qu**'on alimente l'extrudeuse à partir d'au moins un fil composite dont la totalité de la matière organique est sous forme de filaments continus.

9. Procédé selon l'une des revendications 6 à 8, **caractérisé en ce qu**'on alimente l'extrudeuse exclusivement à partir de fil composite dont les proportions respectives de matière organique et de verre correspondent à celles de l'objet composite à réaliser.

10. Procédé selon la revendication 1, **caractérisé en ce que** la matière organique est introduite dans l'extrudeuse sous forme de granulés et sous forme de fils continus, les fils étant introduits en aval des granulés.

11. Procédé selon la revendication 10, **caractérisé en ce que** les granulés de matière organique introduits dans l'extrudeuse sont, au moins pour une partie d'entre eux, des granulés comprenant des fibres de verre.

12. Procédé selon la revendication 11, **caractérisé en ce que** les granulés comprenant des fibres de verre sont, au moins pour une partie d'entre eux, des granulés qui résultent du broyage d'objets composites de rebut.

13. Procédé selon la revendication 1, **caractérisé en ce qu**'on introduit dans l'extrudeuse au moins une partie de la matière organique sous forme de matière colorée par un adjuvant.

14. Application du procédé défini par l'une des revendications précédentes, à la fabrication d'un jonc susceptible d'être tronçonné sous la forme de granulés renforcés de fibres de verre.

15. Application du procédé défini par l'une des revendications 1 à 13, à la fabrication par extrusion d'un profilé renforcé de fibres de verre.

16. Application du procédé défini par l'une des revendications 1 à 13, à la fabrication par moulage par injection d'une pièce renforcée de fibres de verre.

## Claims

1. Process for manufacturing a composite product, formed by combining a thermoplastic organic material, reinforcing fibres, such as glass fibres and optionally organic additives and mineral materials, obtained by extrusion moulding or injection moulding from an extruder supplied with said material and said reinforcement, which consists in introducing at least some of the organic material into this extruder in the form of continuous filaments or fibres.

2. Process according to Claim 1, characterized in that the continuous organic material fibres and the reinforcing fibres are introduced into the extruder via the same inlet.

3. Process according to Claim 2, characterized in that the reinforcing fibres are introduced into the extruder in the form of cut fibres.

4. Process according to Claim 2, characterized in that the extruder is supplied with continuous organic material fibres taken from one or more rolls, and continuous reinforcing fibres taken from one or more other rolls.

5. Process according to Claim 1, characterized in that the continuous organic material fibres and reinforcing fibres, likewise in the form of continuous fibres, are introduced into the extruder via two different inlets, the second fibres being introduced downstream of the inlet of the first fibres.

6. Process according to Claim 1, characterized in that the extruder is supplied with at least one composite fibre formed by the combination of continuous glass filaments and continuous organic material filaments.

7. Process according to Claim 6, characterized in that the extruder is fed with at least one composite fibre, part of the organic material of which is in the form of a layer covering said fibre.

8. Process according to Claim 6, characterized in that the extruder is supplied with at least one composite fibre all the organic material of which is in the form of continuous filaments.

9. Process according to any one of Claims 6 to 8, characterized in that the extruder is supplied solely with composite fibre, the respective proportions of organic material and glass corresponding to those of the composite object to be produced.

10. Process according to Claim 1, characterized in that the organic material is introduced into the extruder in the form of granules and in the form of continuous fibres, the fibres being introduced downstream of the granules.

11. Process according to Claim 10, characterized in that at least some of the organic material granules introduced into the extruder are granules comprising glass fibres.

12. Process according to Claim 11, characterized in that at least some of the granules comprising the glass fibres are granules resulting from the crushing of waste composite objects.

13. Process according to Claim 1, characterized in that at least part of the organic material is introduced into the extruder in the form of material coloured with an additive.

14. Application of the process defined by one of the preceding claims, in the manufacture of a rod which can be cut into granules reinforced with glass fibres.

15. Application of the process defined by one of Claims 1 to 13, in the manufacture by extrusion of a profiled part reinforced with glass fibres.

16. Application of the process according to any one of Claims 1 to 13, in the manufacture by injection moulding of a part reinforced with glass fibres.

## Patentansprüche

1. Verfahren zur Herstellung eines Verbunderzeugnisses, das durch Verbinden von einem thermoplastischen organischen Material, Verstärkungsfasern wie Glas- und gegebenenfalls Mineralfasern und organischen Zusatzstoffen gebildet und mittels Formgebung durch Extrudieren oder Spritzgießen ausgehend von einem Extruder erhalten ist, der mit dem Material und der Verstärkung versorgt wird, welches darin besteht, daß wenigstens ein Teil des organischen Materials dem Extruder in Form von Endlosfäden oder Endlosfasern zugeführt wird.

2. Verfahren nach Anspruch 1, **dadurch gekennzeichnet, daß** die Endlosfäden aus organischem Material und die Verstärkungsfasern dem Extruder durch denselben Eingang zugeführt werden.

3. Verfahren nach Anspruch 2, **dadurch gekennzeichnet, daß** die Verstärkungsfasern dem Extruder in zugeschnittener Form zugeführt werden.

4. Verfahren nach Anspruch 2, **dadurch gekennzeichnet, daß** der Extruder mit Endlosfäden aus organischem Material, die von einer oder mehreren Rollen abgewickelt werden, und mit endlosen Verstärkungsfasern, die von einer oder mehreren anderen Rollen abgewickelt werden, versorgt wird.

5. Verfahren nach Anspruch 1, **dadurch gekennzeichnet, daß** die Endlosfäden aus organischem Material und die Verstärkungsfasern, die ebenfalls in endloser Form vorliegen, dem Extruder durch zwei verschiedene Eingänge zugeführt werden, wobei letztere nach dem Eingang der ersteren zugeführt werden.

6. Verfahren nach Anspruch 1, **dadurch gekennzeichnet, daß** der Extruder mit wenigstens einem Verbundfaden versorgt wird, der durch die Vereinigung von endlosen Glasfasern und Endlosfasern aus organischem Material gebildet ist.

7. Verfahren nach Anspruch 6, **dadurch gekennzeichnet, daß** der Extruder mit wenigstens einem Verbundfaden versorgt wird, von dem ein Teil seines organischen Materials in Form einer Schicht vorliegt, die den Faden umgibt.

8. Verfahren nach Anspruch 6, **dadurch gekennzeichnet, daß** der Extruder mit wenigstens einem Verbundfaden versorgt wird, dessen gesamtes organisches Material in Form von Endlosfasern vorliegt.

9. Verfahren nach einem der Ansprüche 6 bis 8, **dadurch gekennzeichnet, daß** der Extruder ausschließlich mit einem Verbundfaden versorgt wird, dessen Anteile an organischem Material und Glas denen des herzustellenden Verbunderzeugnisses entsprechen.

10. Verfahren nach Anspruch 1, **dadurch gekennzeichnet, daß** das organische Material dem Extruder in Form von Granulat und Endlosfäden zugeführt wird, wobei letztere nach dem Granulat zugeführt werden.

11. Verfahren nach Anspruch 10, **dadurch gekennzeichnet, daß** wenigstens ein Teil des dem Extruder zugeführten Granulates aus organischem Material Glasfasern enthält.

12. Verfahren nach Anspruch 11, **dadurch gekennzeichnet, daß** wenigstens ein Teil des Glasfasern enthaltenden Granulates aus der Zermahlung von Ausschußverbunderzeugnissen stammt.

13. Verfahren nach Anspruch 1, **dadurch gekennzeichnet, daß** wenigstens ein Teil des organischen Materials dem Extruder in Form eines durch einen Zusatzstoff gefärbten Materials zugeführt wird.

14. Anwendung des Verfahrens nach einem der vorhergehenden Ansprüche auf die Herstellung eines Stranges, der zur Form durch Glasfasern verstärkten Granulats zugeschnitten werden kann.

15. Anwendung des Verfahrens nach einem der Ansprüche 1 bis 13 auf die Herstellung eines mit Glasfasern verstärkten Profils durch Extrudieren.

16. Anwendung des Verfahrens nach einem der Ansprüche 1 bis 13 auf die Herstellung eines mit Glasfasern verstärkten Gegenstandes durch Spritzgießen.
